# EUROPEAN PATENT APPLICATION

(11) **EP 4 786 371 A1**
(43) Date of publication of application: **05.08.2026**
(21) Application number: 25155772.4
(22) Date of filing: 04.02.2025
(51) Int. Cl.: B65G 1/04, B65G 1/137

(54) **OPERATING AN AUTOMATED STORAGE AND RETRIEVAL SYSTEM**

(71) Applicant: AutoStore Technology AS, 5578 Nedre Vats (NO)
(72) Inventor: GJERDEVIK, Øystein, 5578 Nedre Vats (NO)
(74) Representative: Kilburn & Strode LLP

(57) **Abstract**

The disclosure relates to a method for operating an automated storage and retrieval system comprising a port, the method comprising: presenting, at a first opening of the port, a first storage container with an item therein; presenting, at a second opening of the port, a transfer container, the transfer container having a retractable panel; and receiving, within the transfer container, the item from the first storage container.

## Description

### TECHNICAL FIELD

The disclosure relates to a method for operating an automated storage and retrieval system and to an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The ports are provided to present items stored within the containers for retrieval from the containers to fulfil an order for those items. As such, the purpose of the grid is to store the items within the containers and the purpose of the ports is to provide an interface enabling retrieval of items from the containers. An order may comprise multiple items. The items, once retrieved from the containers, may be consolidated and shipped to a customer.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a storage container according to the present disclosure;
Fig. 5B shows a transfer container according to the present disclosure;
Fig. 6 shows a port according to the present disclosure;
Fig. 7 shows a storage system according to the present disclosure;
Fig. 8 shows a carton packing apparatus according to the present disclosure;
Fig. 9 shows a method according to the present disclosure.

### DETAILED DESCRIPTION

In overview, the disclosure relates to a method for operating an automated storage and retrieval system comprising a port. The method includes presenting, at a first opening of the port, a first storage container with an item therein. The method includes presenting, at a second opening of the port, a transfer container having a retractable panel, for example a retractable base. The transfer container receives the item from the first storage container, for example via manipulation by a picking robot or via transfer by a human operator. Multiple items from multiple storage containers may be presented at the port and transferred to the transfer container. The transfer container can be lifted, by a robotic container-handling vehicle and via the port, to a top of the storage grid and transported to a carton packing apparatus. At the carton packing apparatus, the item may be retrieved from the transfer container for shipping. The item maybe emptied into a shipping carton via retraction of the retractable panel.

The retractable panel enables efficient and automatic retrieval of the item or items from the transfer container to a shipping carton without need for further touch points. This provides more efficient transfer of items between storage locations and packed orders ready for shipping because the items do not need manual handling or robotic picking after they are received in the transfer container. This is particularly relevant for orders comprising only a single item or a small number of items. For such orders, previous approaches to 'consolidation' of the item or items of an order have involved a high number of touch points relative to the number of items present, meaning the time and effort spent transferring items between various different containers can outweigh the potential efficiency gains of consolidation. In contrast, the approach of the present disclosure provides more efficient transfer of items between storage locations and packed orders ready for shipping for orders comprising any number of items.

The transfer container may, in terms of its external dimensions and structure/form, correspond to the external dimensions and structure/form of the first storage container except in that the transfer container comprises the retractable panel. This enables the first storage container and the transfer container to both be presented at openings of ports and both be transported by robotic container-handling vehicles of the automated storage and delivery system.

Typically, once items are retrieved from a storage grid, they may be processed and packaged for shipping via packing infrastructure external to the automated storage and retrieval system. The present inventor has realised that the automated storage and retrieval system, and in particular the port thereof, can itself be used to integrate transport and packaging operations. This approach returns retrieved items to the storage grid to make more versatile use of the infrastructure thereof. Moreover, this provides a more integrated solution which reduces engineering complexity and provides more efficient use of available operational space around the storage grid.

### Automated storage and retrieval system overview

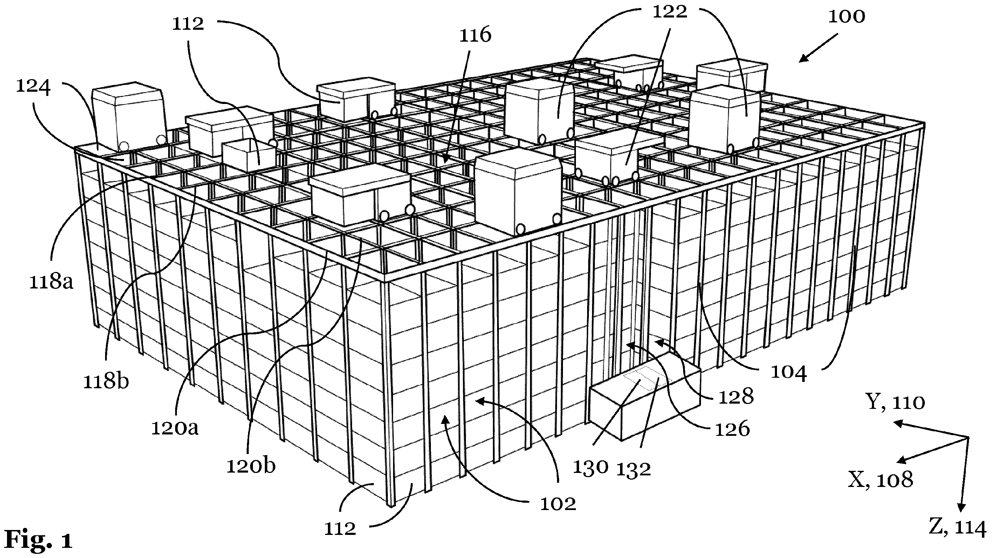

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

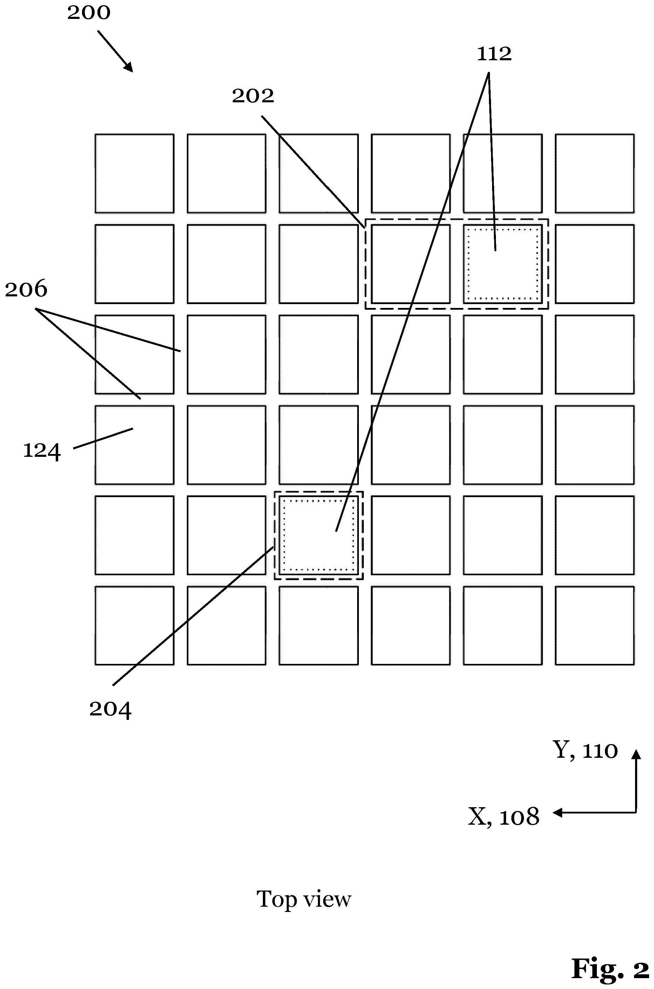

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

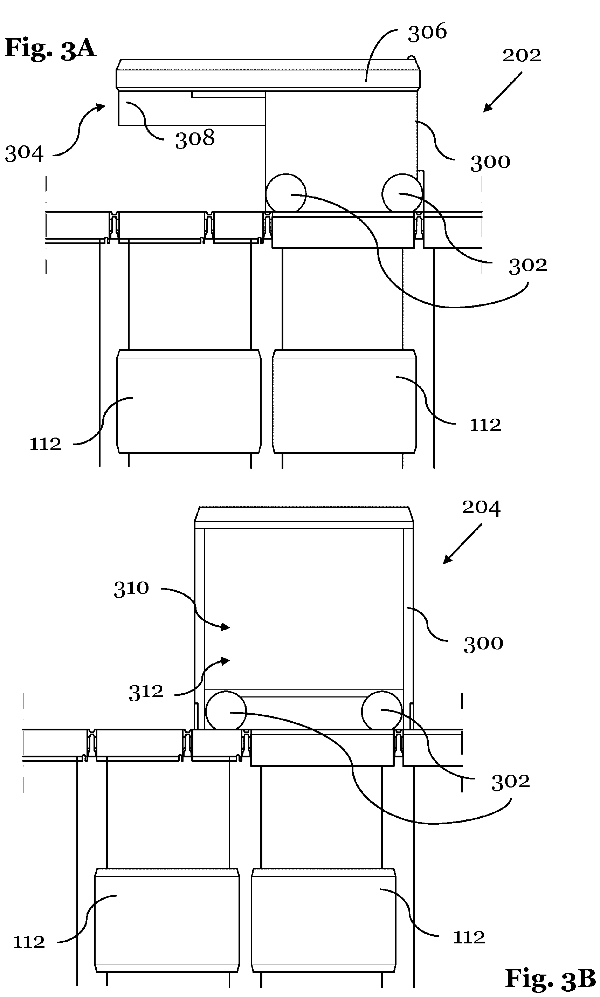

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

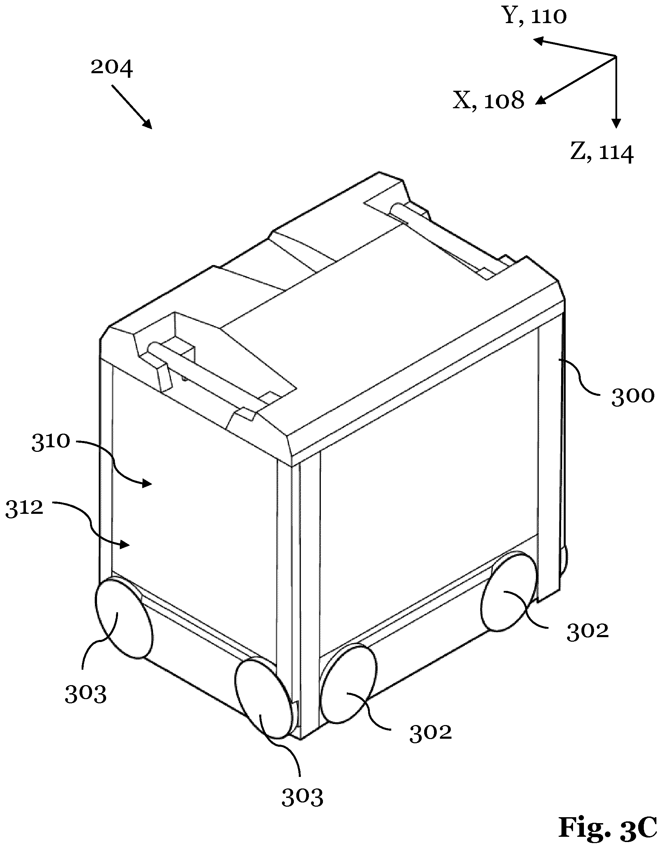

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

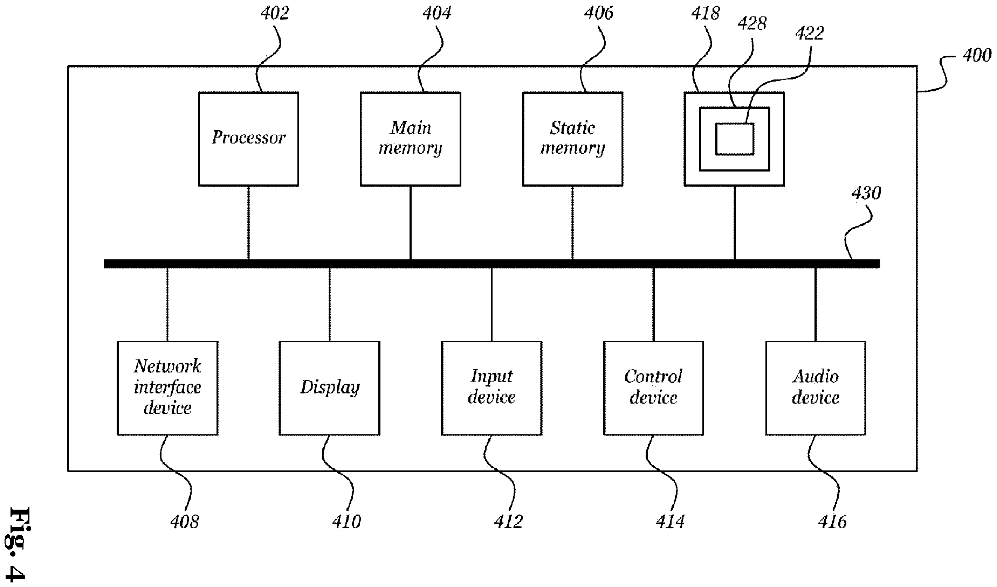

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

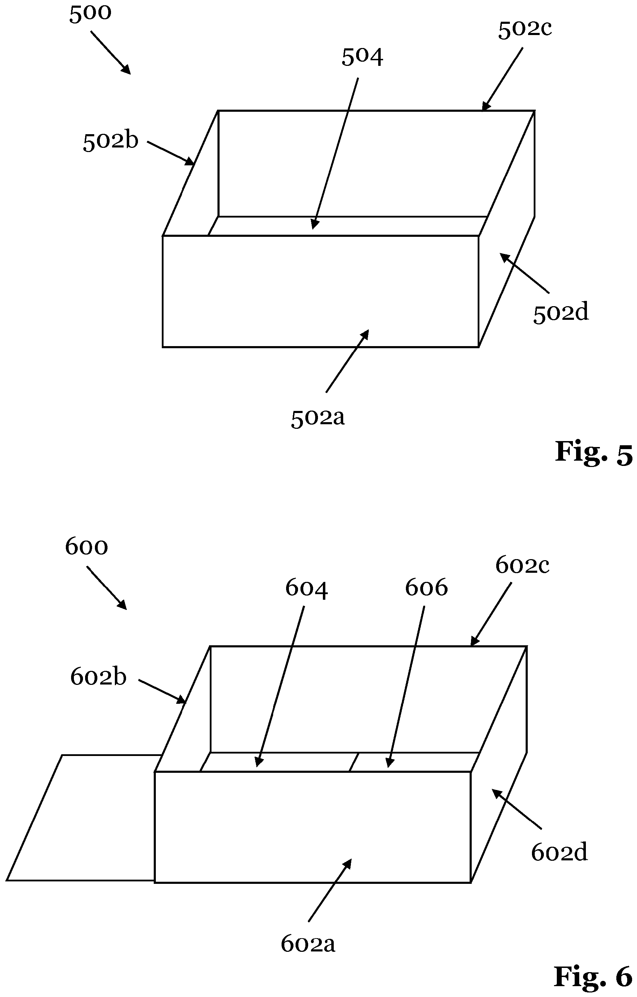

Fig. 5 shows a storage container 500 according to the present disclosure. The storage container 500 may correspond to and have a corresponding form and function to the storage container 112 described in relation to Fig. 1. The storage container 500 may be suitable for storage in the grid 100, may be suitable for being transported by the robots 122 and may be suitable for presentation in the port 130, 132. The storage container 500 may comprise one or more indents or protrusions suitable for gripping by gripping device 308 (see Fig. 3A) of robots 122.

The storage container 500 may comprise a plurality of side panels 502. As depicted in Fig. 5, the side panels 502 may comprise four side panels 502a, 502b, 502C, 502d. The side panels 502a and 502C may be arranged opposite and parallel to each other such that the storage container 500 is generally rectangular in plan view. The side panels 502b and 502d may be arranged opposite and parallel to each other (and perpendicular to side panels 502a and 502c). The storage container 500 may comprise a base panel 504 arranged at the bottom of the storage container 500. A respective lower edge of each of the side panels 502 may be fixed to a respective side edge of the base panel 504. In other words the panels (comprising side panels 502 and base panel 504) may collectively define an open box shape with a storage space therewithin which is enclosed at its lower and side surfaces and open at its top surface. An item may be disposed and stored in the storage space resting on the base panel 504.

Fig. 6 shows a transfer container 600 according to the present disclosure. The transfer container 600 may have a corresponding form to the storage container 500 described in relation to Fig. 5 except where described otherwise herein. The transfer container 600 may have the same exterior dimensions and shape as the storage container 500. In other words, the width, length and height of the transfer container 600 may respectively be the same as the width, length and height of the storage container 500. The transfer container 600 may be suitable for storage in the grid 100, may be suitable for being transported by the robots 122 and may be suitable for presentation in the port 130, 132. The transfer container 600 may comprise one or more indents or protrusions suitable for gripping by gripping device 308 (see Fig. 3A) of robots 122.

The transfer container 600 may comprise a plurality of side panels 602. As depicted in Fig. 6, the side panels 602 may comprise four side panels 602a, 602b, 602c, 602d. The side panels 602a and 602c may be arranged opposite and parallel to each other such that the transfer container 600 is generally rectangular in plan view. The side panels 602b and 602d may be arranged opposite and parallel to each other (and perpendicular to side panels 602a and 602c). Each of the side panels 602 may correspond respectively to the corresponding side panels 502 described in relation to Fig. 5.

The transfer container 600 may comprise a retractable base panel 604. The retractable base panel 604 may be slidable relative to the side panels 602. The retractable base panel 604 may be slidable in a direction parallel to the plane of two of the side panels 602 and perpendicular to the plane of the other two side panels 602. In other words, the retractable base panel 604 may be slidable such that it no longer covers the base or footprint of the transfer container 600 in plan view. This may be a horizontal/left-right direction as depicted in Fig. 6. The retractable base panel 604 may be slidable between first and second positions. One or more of the side panels 602, e.g. side panels 602a and 602c, may comprise slots or grooves in which the base panel 604 can slide (e.g. in the left-right direction) between the first and second positions. The base panel 604 can be selectively moved between the first and second positions.

In the first position, a respective lower edge of each of the side panels 602 may abut a respective side edge of the base panel 604. In other words the panels (comprising side panels 602 and base panel 604) may collectively define an open box shape with a storage space therewithin which is enclosed at its lower and side surfaces and open at its top surface. An item may be disposed and stored in the storage space resting on the base panel 604. The first position may be referred to as a closed position.

In the second position, the base panel 604 may be separated from a lower edge of at least one side panel 602 of the transfer container 600. For example, the base panel 604 may be separated from the lower edge of the side panel 602d and may not abut, or may only abut a part of, the lower edges of side panels 602a and 602d (as depicted in Fig. 6). As can be seen in Fig. 6, this results in part of the base panel 604 protruding from the side of the transfer container 600. The sliding of the base panel 604 opens an aperture 606 at a bottom of the transfer container 600. The second position may therefore be referred to as an open position. An item which was stored in the storage space when the base panel 604 was in the closed position may fall through the aperture 606 when the base panel 604 is moved to the open position.

While the transfer container 600 as depicted in Fig. 6 has been described as having a retractable base panel 604, in some examples the base panel 604 may be fixed in position and one or more of the side panels 602 may instead be retractable/slidable between a respective closed position and a respective open position in which a respective aperture is formed in a respective side of the transfer container 600. In such examples, the transfer container 600 may be tilted to cause the item to fall from the transfer container 600 through the aperture, or a mechanical arm may be used to push the item through the aperture such that it falls therefrom.

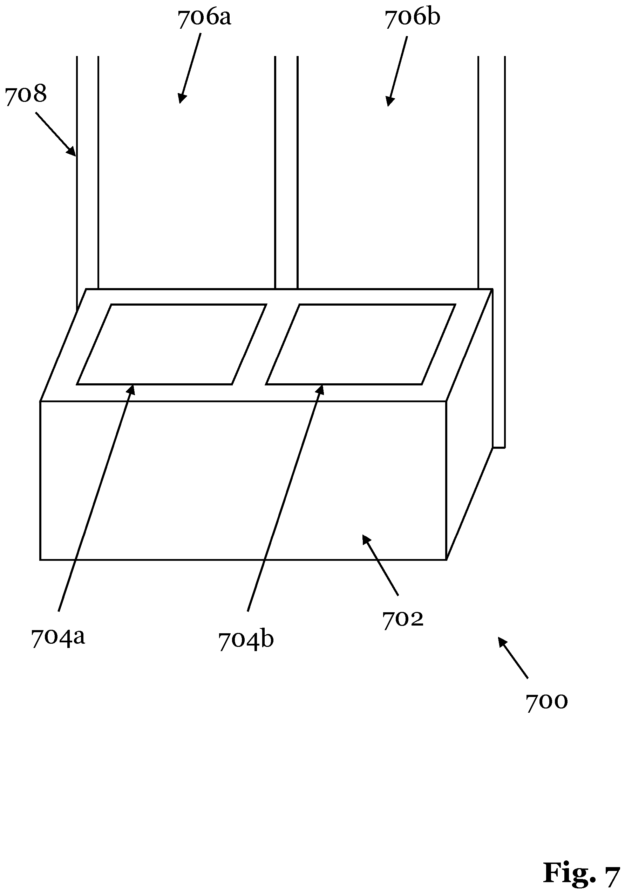

Fig. 7 shows a port 700 according to the present disclosure. The port may correspond to and comprising a similar form and function to the port 130, 132 described in relation to Fig. 1.

The port 700 may comprise a housing 702. The housing 702 may comprise one or more panels supported on a frame. The housing 702 may prevent access to an interior of the port 700 for improved safety and operational efficiency.

The port 700 may comprise a first opening 704a. The port 700 may comprise a second opening 704b. The first and second openings (and any other openings of the port) may collectively be referred to as openings 704. Each of the openings 704 may comprise a hole or gap or aperture in the housing 702. Each of the openings 704 may enable access to a respective container 112 held within the port 700, i.e. within the housing 702 thereof. A respective container 112 may be supported in a respective presentation position immediately below the respective opening 704. The container may be a storage container as described in relation to Fig. 5 or may be a transfer container 600 as described in relation to Fig. 6. For example, a first storage container 500 may be presented at the first opening 704a of the port 700. A transfer container 600 may be presented at the second opening of the port 700.

A picking robot or human operator may retrieve an item from the first storage container 500 through the first opening 704a when it is in the respective presentation position. The picking robot or human operator may dispose the item in the transfer container 600 by dropping or passing it through the second opening 704b into the transfer container 600 therebelow. The picking robot may comprise a gripping device or suction device for selectively engaging and holding the item, and may comprise one or more movement mechanisms for moving the gripping device/suction device holding the item between the storage container 500 and the transfer container 600. The one or more movement mechanisms may comprise, for example, one or more beams pivotable or otherwise rotatable with respect to each other.

In some examples, a second storage container 500 with a second item therein may subsequently be presented at the first opening 704a. The picking robot or human operator may retrieve the second item from the second storage container 500 and may dispose the second item in the transfer container 600 by dropping or passing it through the second opening 704b into the transfer container 600 therebelow. Therefore, the item and the second item may be consolidated in the transfer container 600, i.e. the transfer container 600 may hold multiple items retrieved from different storage containers 500.

The port 700 may comprise a respective cover or hatch configured to selectively cover and uncover each of the openings 704. This may improve the safety of the port 700 through only enabling access to the containers at appropriate times, e.g. when no mechanical parts within the port 700 are currently in motion. In some examples, all or some of the openings 704 may be tilted forwards such that their edges furthest from the grid 100 are at a lower vertical height than their edges closest to the grid 100. This may make retrieval of items from the containers and/or insertion of items into the containers easier and more efficient.

Fig. 7 also depicts port columns 706a, 706b (collectively referenced as 706 herein). These may generally correspond to port columns 126, 128 referred to in relation to Fig. 1. These are defined between vertical frame members 708, which may generally correspond to vertical frame members 104 referred to in relation to Fig. 1. The port columns 706 comprise empty columns through which robots 122 can raise and/or lower the containers 112 (i.e. the storage containers 500 and/or the transfer containers 600) between the top of the grid 100 and the port 700. A conveyance means such as a conveyor, carousel or robot may be provided at the bottom of the port 700 and may be configured to move the containers between the bottom of the port columns 706 and the openings 704.

While the port 700 is depicted in Fig. 7 as having two openings 704, in some examples the port 700 may have three, four or more of such openings 704, which maybe adjacent to the openings 704a, 704b (i.e. to the left/right of them). For each of such openings, a corresponding port column 706 may be provided aligned therewith.

The port 700 may comprise a third opening 704. A further storage container 500 (e.g. a third storage container 500) may be presented at the third opening 704. The picking robot or human operator may retrieve the further/third item from the third storage container 500 and may dispose the third/further item in the transfer container 600 by dropping or passing it through the second opening 704b into the transfer container 600 therebelow. This may be performed instead of or in addition to the retrieval of the second item from the second storage container 500 presented at the first opening 704. The presentation of the third storage container 500 at the third opening 704 may overlap in time with the presentation of the first storage container 500 at the first opening 704a. This may enable more efficient consolidation of items into the transfer container 600.

The port 700 may comprise a fourth opening 704. A further transfer container 600 may be presented at the fourth opening 704. The picking robot or human operator may retrieve items from storage containers 500 presented at the first and/or third openings 704 and may dispose the these in the further transfer container 600 by dropping or passing them through the fourth opening 704 into the further transfer container 600 therebelow. This may enable more efficient consolidation or orders by enabling consolidation of two orders to be performed in parallel. This may be particularly efficient when there is significant time difference between when a first item of an order can be retrieved and when a second item of the same order can be retrieved.

In some examples, the port 700 may comprise four openings 704 adjacent to each other, with respective storage containers 500 being presented at each of the central two openings 704 (i.e. the second and third openings 704), and respective transfer containers 600 presented at the leftmost and right most openings 704 (i.e. the first and fourth openings 704).

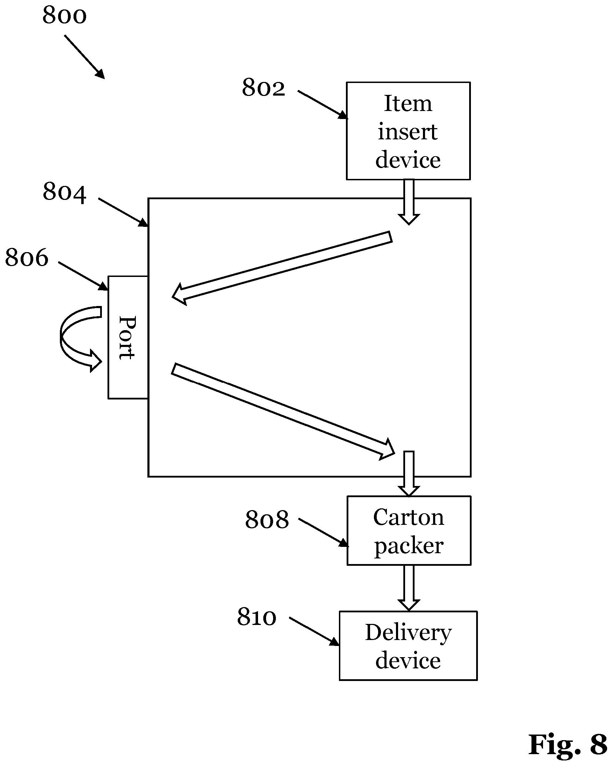

Fig. 8 shows a storage system 800 according to the present disclosure. The storage system 800 may be referred to as an automated storage and retrieval system. The system 800 may correspond and comprise corresponding features to the system of Fig. 1 except where described otherwise herein.

The system 800 may comprise an item insert device 802. The system comprises a grid 804, which may correspond to the grid 100 of Fig. 1. The item insert device 802 may be configured to receive items from an outside source, e.g. via a shipment, load the items into storage containers 500, and load the storage containers 500 containing the items into the grid 804. The item insert device 802 may be directly adjacent to the grid 804 or otherwise located in proximity thereto. In some examples, the item insert device 802 may comprise a port corresponding or similar to the port 700 of Fig. 7. In some examples, the item insert device may comprise a bin insert device in which containers themselves are inserted into a port and from there into the grid 800. The system 800 comprises a port 806. The port may correspond to and comprise a similar form and function to ports 130, 132, 700 as described herein.

In Fig. 8, the movement of items through the system 800 is shown schematically using block arrows. As shown, an item inside a storage container 500 may be inserted into the grid 804. When an order is received for the item, the relevant storage container 500 may be retrieved by a robot 122 and transported to the port 806. This may comprise the robot 122 moving the storage container 500 across the top of the grid and/or lowering the storage container 600 down a port column 126, 128, 706. As described in relation to Fig. 7, the item may be retrieved from the storage container 500 at the port and disposed in a transfer container 600 via a different opening 704 of the same port 806. The transfer container 600 may be transported by the same or a different robot 122 from the port 806 to a carton packer 808 of the system 800. This may comprise the robot 122 lifting the transfer container 600 up through the same or a different port column 126, 128, 706 and/or the robot 122 moving the transfer container 600 across the top of the grid.

The carton packer 808 may be configured to receive the transfer container 600 from the robot 122. The carton packer 808 may be located directly adjacent to the grid 804 or otherwise may be located in proximity thereto. The carton packer 808 may be located level with the top surface of the grid 804 and the robot may push the transfer container 600 to be received by the carton packer 808 using a biasing mechanism such as an actuator. The carton packer 808 may be located slightly below the top surface of the grid 804. The carton packer 808 may be located adjacent to the bottom of the grid 804. The carton packer 808 may be configured to receive the transfer container 600 from the robot 122 from above, via the robot 122 lowering the transfer container 600 to the carton packer 808.

The carton packer 808 may be configured to automatically transfer the one or more items in the transfer container 600 into a carton suitable for shipping/delivery of the one or more items. The system 800 may comprise a delivery device 810. The delivery device 810 may be configured to receive items packed in cartons from the carton packer 808 and to deliver the items packed in cartons to a customer that ordered the items. In some examples, the delivery device 810 may be a delivery vehicle such as a lorry. In some examples, the delivery device 810 may be a kerbside pickup apparatus.

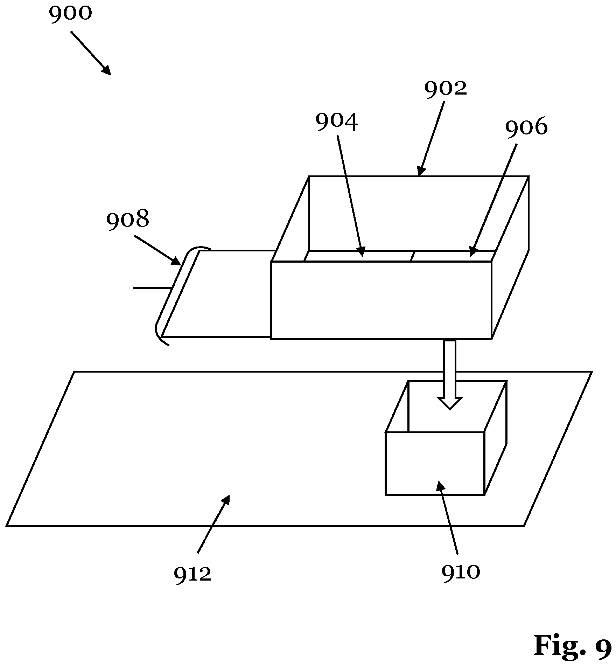

Fig. 9 shows a carton packing apparatus 900 according to the present disclosure. The carton packing apparatus 900 may correspond to the carton packer 808 of Fig. 8. The carton packing apparatus 900 is configured to receive a transfer container 902, which may correspond to the transfer container 600 as described herein. The transfer container 902 may comprise a retractable base panel 904 (which may correspond to the retractable base panel 604 of Fig. 6). When retracted to the open position, the base panel 904 may open an aperture 906 at the bottom of the transfer container 902 (which may correspond to the aperture 606 of Fig. 6).

The retractable base panel 904 may be in its closed position when presented at the port and when transported by the robot to the carton packing apparatus 900 in order to prevent items held therein from falling out. The retractable base panel 904 may be held in its closed position using one or more fixation mechanisms, e.g. a latch or magnetic clasp. The carton packing apparatus 900 may comprise an opening mechanism 908 configured to interface with the retractable base panel 904 and move it between its closed and open positions (and vice versa). The opening mechanism may be configured to undo or otherwise disable the one or more fixation mechanisms in order to enable this. The retractable base panel 904 may comprise one or more protrusions or indents which the opening device 908 may be configured to grip in order to move the retractable base panel 904 relative to the rest of the transfer container 902. In some examples, the opening device may comprise a hook or gripper configured to grip or otherwise interface with the retractable base panel 904 and an actuator configured to effect movement of the retractable base panel when gripped or interfaced with by the hook or gripper.

When the opening device 800 moves the retractable base 904 into the open position, the one or more items held therein may fall through the aperture 906. The transfer container 902 may be supported on a platform or conveyor of the carton packing apparatus 902 which only supports the transfer container 902 at its edges so as to prevent this platform or conveyor blocking the falling of the one or more items through the aperture 906.

The carton packing apparatus 900 may comprise a conveyance means 912 such as a conveyor, carousel or autonomous robot. The conveyance means 912 may be configured to dispose a shipping carton 910 under the transfer container 902, i.e. under the aperture 906 thereof when the retractable base panel 904 is in its open position. The shipping carton 910 may thereby receive the one or more items from the transfer container 902 via the aperture 906.

As such, the carton packing apparatus 900 is configured to automatically transfer the one or more items in the transfer container 902 into the shipping carton 910 which is suitable for shipping/delivery of the one or more items. This transfer of the one or more items to the shipping carton 910 is achieved without need for an additional touchpoint via a human operator or a complex picking robot. Instead, the retractable base panel 904 and the sliding thereof enable efficient transfer of the items for shipment.

The opening device may be configured to subsequently close the retractable base panel 904 by sliding it in the opposite direction back to the closed position. The transfer container 902 may then be returned to the grid 804/the port 806, e.g. by one of the robots 122.

In some examples, the carton packing apparatus 900 is configured to provide a size of shipping carton 910 the dimensions of which are based on dimensions of the one or more items in the transfer container 902. The carton packing apparatus 900 may have access to a plurality of different sizes of shipping cartons 910 and may select one of these shipping cartons 910 based on the dimensions of the one or more items in the transfer container 902. In other examples, the carton packing apparatus 900 may have access to a packaging material such as cardboard and may dynamically form the shipping carton with dimensions based on the dimensions of the one or more items in the transfer container 902. For example, the carton packing apparatus 902 may comprise a cutting device configured to cut the packaging material to an appropriate size. The carton packing apparatus 902 may comprise a folding device configured to fold the cut packaging material to have appropriate length, width and height based on the dimensions of the one or more items.

In some examples, the dimensions of the one or more items may be determined using one or more cameras located above the transfer container 902. The images captured may be transmitted to a controller of the carton packing apparatus 900, which may be configured to determine the location/dimensions of the one or more items within the transfer container 902 using machine vision based on the images captured. The controller may be configured to select the appropriately dimensioned shipping carton 910 based on this determination. The controller may be configured to instruct the cutting device and/or the folding device based on this determination.

In some examples, the transfer container 902 may comprise one or more adjustable interior walls which can be slid relative to the side panels of the transfer container 902 to form one or more sub-compartments of adjustable dimensions. The one or more adjustable interior walls may be slid by a mechanical actuator or a human such that they abut the one or more items in the sub-compartment. The positions of the one or more adjustable interior walls may be identified by the cameras/machine vision/controller in order to determine the dimensions/location of the one or more items as described above. Alternatively, one or more sensors may be implemented in the transfer container 902 for determining the locations of the side walls and transmitting these to the controller for provision of an appropriately dimensioned shipping carton 910 as described above. These sensors may take any suitable form, e.g. may use light gates or time of flight sensors.

While Fig. 9 depicts the retractable panel of the transfer container 902 comprising a retractable base panel 904 of the transfer container 902, in other examples one or more of the side panels of the transfer container 902 may be retractable (as also described in relation to Fig. 6). The carton packing apparatus 900 may comprise a mechanism for tilting the transfer container 902 such that the one or more items held within the transfer container fall through an aperture in the transfer container 902 caused by sliding (opening) of the retractable side panel. For example, the carton packing apparatus 900 may comprise a platform configured to support the transfer container 902 and an actuator configured to raise one side of the platform relative to an opposite side of the platform in order to tilt the transfer container 902 so as to cause the one or more items to fall through the aperture.

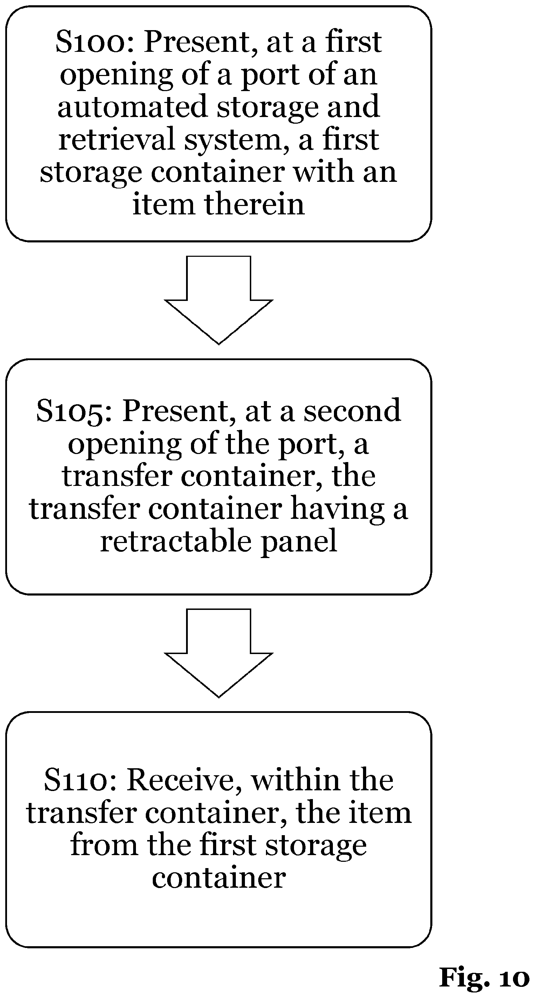

Fig. 10 shows a method according to the present disclosure. The method may be performed by the apparatuses and devices described herein. The method may be performed by the port 700 and the port 700 may be configured to perform the method. The method may be performed by the system 800 and the system 800 may be configured to perform the method.

In block S100, the method comprises presenting, at a first opening of a port of an automated storage and retrieval system, a first storage container with an item therein. The storage container may correspond to the storage container 500 of Fig. 5.

In block S105, the method comprises presenting, at a second opening of the port, a transfer container, the transfer container having a retractable panel. The transfer container may correspond to the transfer container 600 of Fig. 6. The retractable panel may be a retractable base panel of the transfer container.

In block S110, the method comprises receiving, within the transfer container, the item from the first storage container. For example, a picking robot or human operator may retrieve the item from the first storage container through the first opening and may place the item in the transfer container through the second opening.

In some examples, one or more additional storage containers may be presented at the first opening or at a third opening of the port. One or more items may be retrieved from such storage containers and disposed in the transfer container in order to consolidate the items of an order.

The transfer container may be lifted by a robot as described herein and transferred to a carton packing apparatus 900 as described in relation to Fig. 9. The carton packing apparatus 900 may transfer the one or more items to a shipping carton as described in relation to Fig. 9.

The present disclosure provides apparatuses and techniques enabling more efficient retrieval and transfer of an item from a storage grid to a packed order ready for shipping. This is achieved via more versatile use of the automated storage and retrieval system itself, e.g. the ports, grid and robots thereof. This provides more integrated transport and packaging operations which reduce engineering complexity and provide more efficient use of available operational space around the storage grid.

### Penultimate comments

The present disclosure also provides a port comprising a first opening configured to present a first storage container with an item therein, a second opening configured to present a transfer container, the transfer container having a retractable panel and being configured to receive the item from the first storage container. The port may comprise any of the features and functions of the ports described herein and may interact with other components of the automated storage and retrieval system as described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for operating an automated storage and retrieval system comprising a port, the method comprising:
presenting, at a first opening of the port, a first storage container with an item therein;
presenting, at a second opening of the port, a transfer container, the transfer container having a retractable panel; and
receiving, within the transfer container, the item from the first storage container.

2. The method of claim 1, comprising:
presenting, at the first opening of the port, a second storage container with a second item therein; and
receiving, within the transfer container, the second item from the second storage container.

3. The method of claim 1 or claim 2, comprising:
presenting, at a third opening of the port, a third storage container with a third item therein; and
receiving, within the transfer container, the third item from the third storage container.

4. The method of claim 3, wherein the presenting of the first storage container at the first opening and the presenting of the third storage container at the third opening overlap in time.

5. The method of any preceding claim, wherein exterior dimensions of the transfer container are the same as exterior dimensions of the first storage container.

6. The method of any preceding claim, wherein the retractable panel comprises a retractable base panel of the transfer container.

7. The method of any preceding claim, wherein the retractable panel comprises a retractable side panel of the transfer container.

8. The method of any preceding claim, comprising lifting, by a robotic container-handling vehicle of the automated storage and retrieval system, the transfer container with the item therein from the port to a top of a storage grid of the automated storage and retrieval system.

9. The method of claim 8, comprising transporting, by the robotic container-handling vehicle, the transfer container to a carton packing apparatus.

10. The method of claim 9, comprising transferring, by the carton packing apparatus, the item from the transfer container to a shipping carton via retraction of the retractable panel of the transfer container.

11. The method of claim 10, wherein the carton packing apparatus is configured to position the shipping carton to receive the item from the transfer container.

12. The method of claim 10 or claim 11, wherein the carton packing apparatus is configured to adjust a size of the shipping carton based on dimensions of the item in the transfer container.

13. The method of claim 12, wherein the transfer container comprises one or more adjustable walls for adjusting a size of a sub-compartment of the transfer container based on the dimensions of the item in the sub-compartment of the transfer container.

14. An automated storage and retrieval system comprising a storage grid and a port, the automated storage and retrieval system being configured to perform the method of any of claims 1-7.

15. The automated storage and retrieval system of claim 14, further comprising a robotic container-handling vehicle and a carton packing apparatus, the automated storage and retrieval system being configured to perform the method of any of claims 1-13.
